# EUROPÄISCHE PATENTSCHRIFT

(11) **EP 2 649 914 B1**
(45) Veröffentlichungstag und Bekanntmachung des Hinweises auf die Patenterteilung: **23.09.2020**
(21) Anmeldenummer: 13162982.6
(22) Anmeldetag: 09.04.2013
(51) Int. Cl.: A47J 27/00

(54) **Tiegeltrennvorrichtung**
Jar separation device
Dispositif de séparation de creuset

(30) Priorität: 11.04.2012 DE 102012007216
(43) Veröffentlichungstag der Anmeldung: 16.10.2013
(73) Patentinhaber: RATIONAL Wittenheim SAS, 68271 Wittenheim Cedex (FR); RATIONAL Aktiengesellschaft, 86899 Landsberg am Lech (DE); RATIONAL International AG, 9435 Heerbrugg (CH)
(72) Erfinder: Lingenheil, Markus, 79206 Breisach/Oberrimsingen (DE); Mink, Diana, 9463 Oberriet (CH); Wassmus, Reinhard, 79395 Neuenburg (DE)
(74) Vertreter: Prinz & Partner mbB

(56) Entgegenhaltungen:
- EP-A1- 2 386 205
- WO-A1-00/49924
- DE-A1-102004 039 256
- DE-U1- 9 012 982
- DE-U1- 20 000 714
- DE-U1- 29 909 174
- FR-A1- 2 788 668

## Beschreibung

Die Erfindung betrifft ein Verfahren zum Unterteilen eines tiegelartigen Garbehälters in unterschiedliche Garzonen. Die Erfindung betrifft ferner ein Gargerät mit einem tiegelförmigen Garbehälter und einer Steuerung.

Gargeräte mit tiegelartigen Garbehältern können in Restaurants und der Großgastronomie eingesetzt werden, um große Speisenmengen zuzubereiten. Eine Ausführungsform eines solchen Gargeräts ist am Markt unter der Bezeichnung "VarioCooking Center" bekannt. Der Boden des Garbehälters ist mit einer Heizvorrichtung versehen, sodass die Wärmeübertragung zu den Nahrungsmitteln durch unmittelbare Wärmeübertragung vom Boden erfolgt. Auf dem Boden des Gargeräts können beispielsweise Steaks angebraten werden, oder es kann im Garbehälter eine Suppe zubereitet werden.

Es ist bereits bekannt, dass der Boden des tiegelförmigen Garbehälters von der Steuerung in unterschiedliche Bereiche aufgeteilt wird, deren Heizvorrichtungen unterschiedlich angesteuert werden. So können beispielsweise in einem Bereich mit höherer Temperatur Steaks angebraten werden, die dann in einem zweiten Bereich mit niedrigerer Temperatur noch einige Zeit ruhen.

Aus DE 299 09 174 U1 ist ein Kochtopf bekannt, der Führungsschienen aufweist, in die Trennwände eingesetzt werden können, um den Kochtopf in unterschiedliche Garabschnitte zu unterteilen. Die Führungsschienen weisen zudem Dichtungen auf.

In DE 10 2004 039 2556 A1 und EP 2 386 205 A1 sind Trennwände für Bleche beschrieben.

DE 90 12 982 zeigt einen Brätkasten, der mit Zwischenwänden versehen ist.

Aus FR 2 788 668 A1 ist ein Gusselement zur Herstellung von Nahrungsmitteln wie Schinken bekannt, das ebenfalls Trennwände umfasst.

Die DE 200 00 714 U1 beschreibt ein Gefäß zur Zubereitung von Speisen, in das eine Trennwand eingesetzt werden kann, die dichtend und bündig mit einer Grundfläche und einer Wandung des Gefäßes abschließt. Durch die Unterteilung in unterschiedliche Bereiche können in dem Gefäß unterschiedliche Gargutarten zubereitet werden. An einer Unterkante der Trennwand und im Kontaktbereich mit der Wandung sind Dichtlippen vorgesehen.

Die Aufgabe der Erfindung besteht darin, die Einsatzmöglichkeiten eines solchen Gargeräts zu erhöhen.

Zur Lösung dieser Aufgabe ist erfindungsgemäß bei einem Verfahren der eingangs genannten Art vorgesehen, dass in den Garbehälter mindestens eine Tiegeltrennvorrichtung eingesetzt wird, die unterschiedliche Garzonen voneinander abtrennt, die unterschiedlich angesteuert werden können, wobei im Boden des tiegelartigen Garbehälters eine Heizvorrichtung aus einzeln ansteuerbaren Heizelementen vorgesehen ist, die den Garzonen zugeordnet sind. Weiterhin ist erfindungsgemäß ein Gargerät mit einer Steuerung und einem tiegelartigen Garbehälter vorgesehen, in den eine Tiegeltrennvorrichtung, die einen plattenartigen Körper und eine Dichtung aufweist, die sich entlang von mindestens drei Rändern des Körpers erstreckt, eingesetzt ist, wobei die Steuerung eingerichtet ist, abzufragen, ob die Tiegeltrennvorrichtung im Garbehälter angeordnet ist, und/oder automatisch erkennt, ob die Tiegeltrennvorrichtung im Garbehälter angeordnet ist, und wobei die Steuerung eingerichtet ist, die Heizvorrichtung im Boden des Garbehälters virtuell in unterschiedliche Heizzonen zu unterteilen, denen einzeln ansteuerbare Heizelemente zugeordnet sind und die dem Bediener zur separaten Steuerung angeboten werden. Die Erfindung beruht auf dem Grundgedanken, das Innere des tiegelförmigen Garbehälters durch die Tiegeltrennvorrichtung in zwei oder mehr physikalisch voneinander getrennte Bereiche zu unterteilen. Über die bereits bekannte, zweidimensionale Aufteilung des Bodens des Garbehälters in unterschiedliche Teilgarflächen hinaus erfolgt erfindungsgemäß eine Unterteilung des Garbehälters in der dritten Dimension, also im Wesentlichen in vertikaler Richtung. Als Ergebnis kann das Gargerät flexibler verwendet werden. Beispielsweise kann in einem Teilbereich mit einer Flüssigkeit gearbeitet werden, beispielsweise Suppe zubereitet werden, während im anderen Bereich mit Kontaktwärme gearbeitet wird, beispielsweise Steaks angebraten werden. Weiterhin wird eine Geschmacksübertragung von einem Teilbereich in einen anderen Teilbereich verhindert. So ist es beispielsweise nun problemlos möglich, in einem Teilbereich Fisch und in einem anderen Teilbereich stark gewürzte Speisen anzubraten. Es kann auch eine Energieeinsparung erzielt werden, da nur die Teilbereiche beheizt werden müssen, die tatsächlich benötigt werden. Schließlich können in rationeller Weise kleine Volumina auch in Gargeräten mit vergleichsweise großen Garbehältern zubereitet werden. Vorzugsweise ist vorgesehen, dass beim Einsetzen der Tiegeltrennvorrichtung eine Dichtung vorgespannt wird, die sich an der Tiegeltrennvorrichtung befindet. Auf diese Weise ergibt sich eine flüssigkeitsdichte Abtrennung zwischen unterschiedlichen Teilbereichen.

Gemäß einer Ausgestaltung der Erfindung kann vorgesehen sein, dass die Tiegeltrennvorrichtung am Garbehälter verriegelt wird. Dies gewährleistet, dass die Tiegeltrennvorrichtung zuverlässig in ihrer Position gehalten wird, auch wenn während eines Garprozesses unterschiedliche Kräfte auf sie einwirken, beispielsweise aufgrund einer in nur einem Teilbereich vorhandenen Flüssigkeitsmenge.

Um zu erkennen, ob eine Tiegeltrennvorrichtung im Garbehälter angeordnet ist, kann die Tiegeltrennvorrichtung mit einem Magneten oder einem magnetisierbaren Element versehen sein. Damit kann die Position einer in einem Garbehälter eingesetzten Tiegeltrennvorrichtung exakt bestimmt werden.

Das Gargerät bzw. der Garbehälter kann einen Sensor aufweisen, der auf den Magneten oder das magnetisierbare Element in der Tiegeltrennvorrichtung anspricht. Bei dem Sensor kann es sich um einen REED-Sensor oder einen induktiven bzw. kapazitiven Sensor handeln. Der Sensor kann im Rand des tiegelförmigen Garbehälters angeordnet sein.

Gemäß einer Ausführungsform der Erfindung ist vorgesehen, dass die Tiegeltrennvorrichtung einen Handgriff an einem oberen Rand aufweist. Dies erleichtert die Handhabung.

Die Tiegeltrennvorrichtung kann auch mindestens eine Verriegelungsvorrichtung aufweisen, mit der sie an dem tiegelförmigen Garbehälter verriegelt werden kann. Mittels der Verriegelungsvorrichtung kann eine zusätzliche Haltekraft aufgebracht werden, sodass die Stabilität der Tiegeltrennvorrichtung verbessert wird.

Gemäß einer Ausgestaltung ist dabei vorgesehen, dass die Verriegelungsvorrichtung mindestens einen Verriegelungshebel aufweist. Dieser kann ausgehend von einer Ausgangsstellung in eine Verriegelungsstellung umgelegt werden, in der er beispielsweise am Rand des Garbehälters angreift und dadurch die Tiegeltrennvorrichtung im Garbehälter arretiert.

Gemäß einer Ausführungsform der Erfindung kann eine Spannvorrichtung vorgesehen sein, mit der die Dichtung vom Körper weg nach außen beaufschlagt werden kann. Durch die Verformung der Dichtung wird eine zusätzliche Spannkraft erzeugt, die zum sicheren Arretieren der Tiegeltrennvorrichtung im Garbehälter und zum zuverlässigen Abdichten zwischen den Wänden des Garbehälters und der Tiegeltrennvorrichtung genutzt werden kann.

Die Tiegeltrennvorrichtung kann beispielsweise so ausgeführt sein, dass ihr Körper zwei parallel zueinander angeordnete Platten aufweist, zwischen denen die Dichtung aufgenommen ist. Dies gewährleistet einen zuverlässigen Sitz der Dichtung.

Zusätzlich kann vorgesehen sein, dass die Spannvorrichtung die Platten einander annähern kann. Eine solche Bewegung führt dann automatisch dazu, dass die Dichtung nach außen beaufschlagt wird, also gegen die Wand oder den Boden des Garbehälters gedrückt wird.

Gemäß einer bevorzugten Ausführungsform der Erfindung ist vorgesehen, dass die Spannvorrichtung mit der Verriegelungsvorrichtung gekoppelt ist. Bei dieser Ausgestaltung sind also Verriegelung und Vorspannen der Dichtung miteinander gekoppelt, sodass durch das Arretieren der Tiegeltrennvorrichtung mittels der Verriegelungsvorrichtung auch automatisch die Dichtung gegen die Wände bzw. den Boden des Garbehälters gedrückt wird.

Die Spannvorrichtung kann beispielsweise durch eine Spannfläche gebildet sein, die an dem Verriegelungshebel vorgesehen ist. Dies ermöglicht, die beiden Platten mit geringem Aufwand aneinander anzunähern, wenn der Verriegelungshebel in die Verriegelungsposition gedrückt wird.

Die Dichtung besteht vorzugsweise aus einem Material, welches unbedenklich in Verbindung mit Lebensmitteln verwendet werden kann und außerdem die nötige Temperaturbeständigkeit aufweist. Besonders bevorzugt werden Silikon oder Teflon.

Vorzugsweise besteht der Körper der Tiegeltrennvorrichtung aus Blech. Dies führt zu einer hohen mechanischen Festigkeit. Ferner ist eine solche Tiegeltrennvorrichtung unempfindlich beim Reinigen.

Bei einem erfindungsgemäßen Gargerät kann der Garbehälter mit einer Markierung versehen sein, die anzeigt, an welcher Stelle eine Tiegeltrennvorrichtung angeordnet werden sollte. Dies erleichtert es, die Tiegeltrennvorrichtung in Übereinstimmung mit den unterschiedlichen Heizzonen am Boden des Garbehälters anzuordnen.

Alternativ kann vorgesehen sein, dass der Benutzer über eine Eingabeeinrichtung eingibt, welche Menge eines bestimmten Garguts zur Verfügung steht, wobei dem Benutzer über akustische und/oder optische Signale einer Positionierungshilfseinrichtung des Gargeräts die optimale Position für die Tiegeltrennvorrichtung hinsichtlich der Garguthöhe angegeben wird. Dadurch wird eine optimale Ausnutzung der Garfläche erreicht, was zum Einen geringere Kosten beim Garprozess aufgrund der gesteigerten Effizienz und zum Anderen ein verbessertes Garergebnis zur Folge hat.

Gemäß einer Ausgestaltung kann vorgesehen sein, dass der Garbehälter an seinem oberen Rand mit einer Haltegestaltung versehen ist, welche die Anbringung der Tiegeltrennvorrichtung erleichtert. Bei der Haltegestaltung kann es sich beispielsweise um einen Clips am Rand des Garbehälters oder ähnliche mechanische Gestaltungen handeln, mit denen ein Hochrutschen der Tiegeltrennvorrichtung und eine daraus resultierende Undichtigkeit vermieden werden kann.

Die Erfindung wird nachfolgend anhand verschiedener Ausführungsformen beschrieben, die in den beigefügten Zeichnungen dargestellt sind. In diesen zeigen:
- Figur 1 in einer schematischen, perspektivischen Ansicht ein Gargerät mit tiegelförmigem Garbehälter, in welchem eine Tiegeltrennvorrichtung angeordnet ist;
- Figur 2 in einer schematischen Seitenansicht die in Figur 1 verwendete Tiegeltrennvorrichtung;
- Figur 3 schematisch einen Schnitt entlang der Ebene III-III von Figur 2;
- Figur 4 in vergrößerter Ansicht das Detail IV von Figur 3; und
- Figur 5 in einer schematischen Seitenansicht eine zweite Ausführungsform der Tiegeltrennvorrichtung.

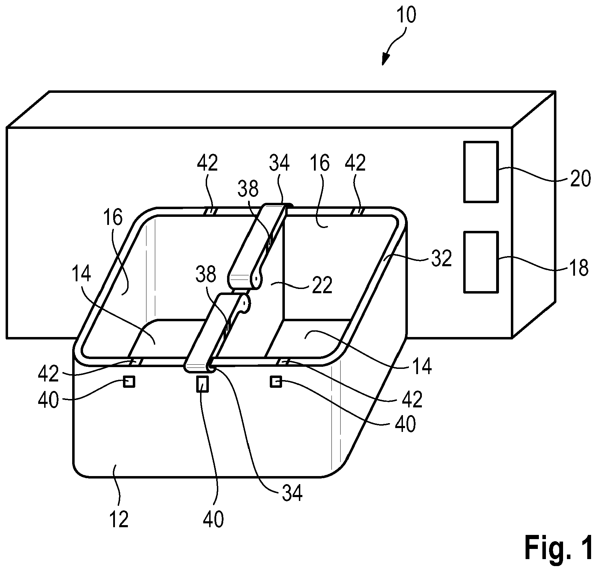

In Figur 1 ist schematisch ein Gargerät 10 gezeigt, das einen tiegelförmigen Garbehälter 12 aufweist. Dieser weist einen Boden 14 auf sowie insgesamt vier Seitenwände 16, von denen in Figur 1 nur zwei zu sehen sind und die insgesamt einen Garraum definieren.

Dem Boden 14 ist eine (hier nicht dargestellte) Heizvorrichtung zugeordnet, die aus einer Vielzahl von einzeln ansteuerbaren Heizelementen besteht. Diese können von einer hier schematisch angedeuteten Steuerung 18 angesteuert werden. Die Steuerung 18 kann unterschiedliche Garprozesse ablaufen lassen, die von einem Bediener über eine schematisch gezeigte Bedieneinheit 20 angewählt werden können. Dabei können die Heizelemente der Heizvorrichtung individuell angesteuert werden, sodass der Boden 14 in unterschiedlichen Heizzonen unterteilt werden kann, die mit unterschiedlichen Temperaturen betrieben werden können.

In das Innere des tiegelförmigen Garbehälters 12 ist eine Tiegeltrennvorrichtung 22 eingesetzt, bei der es sich allgemein ausgedrückt um eine nach Bedarf einsetzbare und entfernbare Trennwand handelt, die sich bei der gezeigten Ausführungsform von einer Seitenwand 16 zur gegenüberliegenden Seitenwand erstreckt und am Boden 14 anliegt. Die Tiegeltrennvorrichtung bildet eine sich in vertikaler Richtung erstreckende, physische Trennung zwischen den Teilbereichen im Inneren des Garbehälters 12, die sich auf der einen und der anderen Seite der Tiegeltrennvorrichtung 22 befinden. Bei der in Figur 1 gezeigten Ausführungsform ist der Innenraum des Garbehälters 12 also in zwei annähernd gleich große Teilbereiche unterteilt, die sich auf der rechten und der linken Seite der Tiegeltrennvorrichtung 22 befinden.

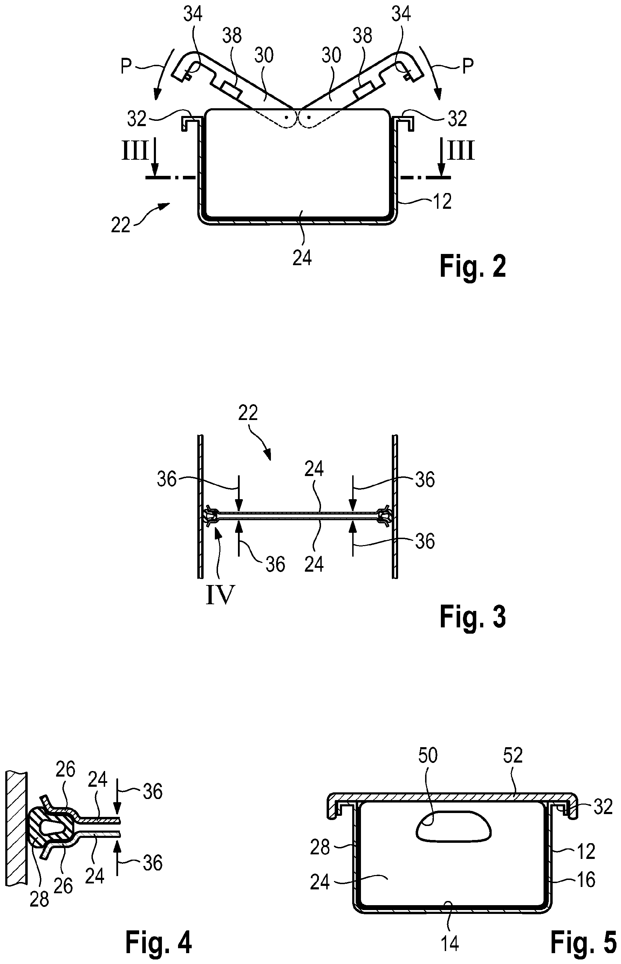

Die Tiegeltrennvorrichtung 22 weist einen plattenförmigen Körper 24 (siehe insbesondere Figur 2) auf, der vorzugsweise aus Blech besteht. Der Körper 24 ist dabei zweilagig ausgeführt (siehe Figur 3), wobei die beiden Platten einander im Abstand gegenüberliegen. Jede der Platten ist entlang der Außenseiten, die im eingesetzten Zustand den Seitenwänden 16 des Garbehälters 12 und dem Boden 14 gegenüberliegen, mit einer Abkantung 26 versehen, sodass zwischen den beiden Platten eine Aufnahme für eine Dichtung 28 gebildet ist. Bei der Dichtung 28 kann es sich um ein Hohlkammerprofil aus Silikon oder Teflon handeln.

Am oberen Rand der Tiegeltrennvorrichtung 22, also dem vom Boden 14 abgewandten Rand, ist eine Verriegelungsvorrichtung in der Form von zwei Verriegelungshebeln 30 angebracht. Die Verriegelungshebel 20 sind mit einem Ende schwenkbar am Körper 24 gelagert und können aus einer in Figur 2 gezeigten Ausgangsposition in der Richtung der Pfeile P mit ihren außenliegenden Enden nach unten verschwenkt werden, sodass sie mit den freien Enden am oberen Rand 32 des Garbehälters 12 angreifen können. Zu diesem Zweck weisen die Verriegelungshebel 30 an ihrem außenliegenden Ende jeweils einen Klemmabschnitt 34 auf, mit dem sie am Rand 32 angreifen können.

Weiterhin ist die Tiegeltrennvorrichtung 22 mit einer Spannvorrichtung versehen, die in den Figuren 3 und 4 durch die Wirkungspfeile 36 symbolisiert ist. Die Spannvorrichtung 36 ermöglicht es, die beiden Platten des Körpers 24 der Tiegeltrennvorrichtung aus einer Ausgangsstellung in eine Spannstellung zu verstellen, in der sie im Vergleich zur Ausgangsstellung mindestens in einigen Bereichen einen geringeren Abstand voneinander haben. Dadurch wird die Dichtung 28 zwischen den beiden Abkantungen 26 zusammengedrückt und in ihrem außenliegenden Bereich vom Körper 24 weg nach außen beaufschlagt.

Die Spannvorrichtung 36 kann durch Spannflächen 38 verwirklicht sein, die an den beiden Verriegelungshebeln 30 vorgesehen sind. Die beiden Verriegelungshebel 30 können beispielsweise einen U-förmigen Querschnitt haben, der mit seinen beiden Seitenschenkeln die beiden Platten des Körpers 24 umgreift und diese, wenn die Verriegelungshebel 30 in die Verriegelungsstellung gedrückt werden, gegeneinanderdrückt.

Wenn die Tiegeltrennvorrichtung 22 in den Garbehälter 12 eingesetzt werden soll, wird sie von oben eingeführt, bis sie auf dem Boden 14 aufsitzt. Dann werden die beiden Verriegelungshebel 30 nach unten gedrückt, was durch die aufzuwendende Kraft bereits dazu führt, dass die Dichtung 28 sich fest am Boden 14 des Garbehälters 12 anlegt. Wenn die Verriegelungshebel 30 in die Verriegelungsposition gelangen, drücken sie mittels der Spannflächen 38 die beiden Platten des Körpers 24 aufeinander zu, sodass die Dichtung 28 auch entlang der vertikalen Ränder der Tiegeltrennvorrichtung, also in dem an den Seitenwänden 16 anliegenden Bereichen, fest gegen die Wand des Garbehälters 12 gedrückt werden. Auf diese Weise ergibt sich an allen drei Seiten der Tiegeltrennvorrichtung, die den Wänden des Garbehälters 12 gegenüberliegen, eine zuverlässige Abdichtung. Durch die Klemmabschnitte 34 ergibt sich zusätzlich eine mechanische Verriegelung am oberen Rand 32 des Garbehälters 12.

Am Garbehälter 12 ist ein Sensor 40 (siehe Figur 1) vorgesehen, beispielsweise ein Reed-Kontakt, der von der Steuerung 18 abgefragt werden kann. Mittels des Sensors 40 kann erkannt werden, ob eine Tiegeltrennvorrichtung 22 im Inneren des Garbehälters angeordnet ist. Dabei ist der Sensor 40 vorzugsweise unmittelbar unter dem Rand 32 des Garbehälters 12 angeordnet, um die heruntergeklappten Verriegelungshebel 30 erfassen zu können.

Bei dem Sensor 40 kann es sich auch um einen kapazitiven oder induktiven Sensor handeln.

Ferner kann der Sensor 40 auch mit einem Magneten oder einem magnetisierbaren Element, welches in der Tiegeltrennvorrichtung 22 angeordnet ist, derart zusammenwirken, dass der Sensor 40 die Positionierung der Tiegeltrennvorrichtung 22 ohne heruntergeklappten Verriegelungshebel 30 erkennt.

Aufgrund der eingesetzten Tiegeltrennvorrichtung 22 kann dem Bediener auf einem Display die unterschiedlichen Heizzonen angezeigt werden, welche zur Verfügung stehen. Der Bediener kann dann über das Display oder eine andere Eingabeeinrichtung die entsprechende Zone wählen, die beheizt werden soll.

Der besondere Vorteil der beschriebenen Tiegeltrennvorrichtung besteht darin, dass sie von einem Bediener mit geringem Aufwand und ohne Werkzeug schnell angebracht werden kann. Dabei ergibt sich eine sehr einfache Bedienung, da sowohl das Einsetzen in den Garbehälter 12 als auch das Verriegeln in derselben Richtung erfolgen, nämlich von oben nach unten.

Wie insbesondere in den Figuren 1 und 2 zu sehen ist, erstreckt sich die Tiegeltrennvorrichtung 22 bis zum oberen Rand 32 des Garbehälters 12. Es ist grundsätzlich auch möglich, Tiegeltrennvorrichtungen zu verwenden, deren Höhe nicht mit der Innenhöhe des Garbehälters übereinstimmt.

Es ist auch möglich, in den Garbehälter mehr als eine Tiegeltrennvorrichtung einzusetzen. Um dem Bediener die korrekte Positionierung zu erleichtern, können beispielsweise am oberen Rand 32 des Garbehälters 12 mehrere Markierungen 42 vorgesehen sein, die es dem Bediener erleichtern, die Tiegeltrennvorrichtung 22 in Übereinstimmung mit der Anordnung der einzelnen Heizelemente am Boden 14 des Garbehälters 12 einzusetzen. Dabei sind den entsprechenden Positionen jeweils eigene Sensoren 40 zugeordnet. Es ist auch möglich, zusätzlich zu der in den Figuren gezeigten "großen" Tiegeltrennvorrichtung 22 kleinere Tiegeltrennvorrichtungen zu verwenden, die sich beispielsweise von einer Seitenwand zu einer eingesetzten Tiegeltrennvorrichtung erstrecken oder auch zwischen zwei Tiegeltrennvorrichtungen. Auf diese Weise kann der Garraum innerhalb des Garbehälters 12 flexibel in viele kleine Einheiten unterteilt werden.

Alternativ ist es auch möglich, dass der Bediener über eine Eingabeeinrichtung angibt, welche Menge eines bestimmten Garguts vorliegt, wobei das Gargerät 10 über die Steuerung 18 und einen entsprechenden Prozessor samt Speicher ermittelt, welche Position der Tiegeltrennvorrichtung 22 für die Menge des Garguts optimal ist.

Diese optimale Position kann dem Bediener über eine akustische und/oder optische Positionierungshilfe vorgeschlagen werden. Beispielsweise könnte die optimale Position auf dem Display angezeigt werden.

Alternativ erkennt der Sensor 40 die Position einer sich im Bereich des Garbehälters 12 befindlichen Tiegeltrennvorrichtung 22. Mittels eines Tons kann dem Bediener die optimale Position für die Tiegeltrennvorrichtung 22 angegeben werden, wobei dies beispielsweise analog zu einem Abstandswarner eines Kraftfahrzeugs geschieht, das heißt, dass die Frequenz des Tons mit verringertem Abstand zwischen der Tiegeltrennvorrichtung 22 und der optimalen Position zunimmt.

Hierbei kann der Sensor 40 insbesondere mit dem Magneten oder dem magnetisierbaren Element in der Tiegeltrennvorrichtung 22 zusammenwirken, um die Position exakt zu bestimmen.

Die optimale Position kann dabei aufgrund des Garguts abhängig sein, wobei beispielsweise bei Suppen oder flüssigen Gerichten vorgesehen ist, dass eine entsprechende Produkthöhe erreicht wird, die für den Garprozess optimal ist.

Die Tiegeltrennvorrrichtungen können auch bei einem Gargerät verwendet werden, das einen Deckel für den Garbehälter 12 aufweist. Diese kann auch bei eingesetzten Tiegeltrennvorrichtungen geschlossen werden, da die Tiegeltrennvorrichtungen (mit ihren Verriegelungshebeln) nur minimal über den oberen Rand 32 des Garbehälters 12 überstehen. Dies kann von einer am Deckel üblicherweise vorhandenen Dichtung problemlos kompensiert werden.

In Figur 5 ist eine zweite Ausführungsform gezeigt, die sich von der ersten Ausführungsform dadurch unterscheidet, dass der Körper 24 der Tiegeltrennvorrichtung 22 durch ein einfaches (einlagiges) dickeres Blech gebildet ist. Der Körper 24 ist auch hier mit einer an drei Seiten umlaufenden Dichtung 28 versehen, die beispielsweise auf den entsprechenden Rand des Körpers 24 aufgesteckt ist. Der Körper 24 ist mit einem Griffloch 50 versehen, welches in der Nähe des oberen Randes des Körpers 24 angeordnet ist, sodass eine möglichst große Höhe zur Verfügung steht, bis zu der Flüssigkeit auf der einen Seite der Tiegeltrennvorrichtung 22 eingefüllt werden kann, bevor sie durch das Griffloch 50 auf die andere Seite fließt.

Die Tiegeltrennvorrichtung 22 wird in den Garraum des Garbehälters 12 eingesetzt, wobei ihre Abmessungen so gewählt sind, dass sich die Dichtung 28 mit einer gewissen Vorspannung an die Seitenwände 16 anlegt. Durch das Eindrücken und auch aufgrund des Gewichts der Tiegeltrennvorrichtung 22 wird auch die sich entlang des unteren Randes erstreckende Dichtung fest gegen den Boden 14 des Garbehälters 12 gedrückt. Zur Fixierung kann ein separater Haltebügel 52 verwendet werden, der auf den oberen Rand 32 des Körpers 24 aufgesetzt wird und an den beiden einander gegenüberliegenden Seiten am Garbehälter 12 angreift. Dies gewährleistet, dass die nötige Vorspannung auf die am Boden 14 anliegende Dichtung aufrechterhalten wird. Der Haltebügel kann dabei als Federbügel ausgeführt sein.

Die Dichtung kann beispielsweise als Lippendichtung mit einer umlaufenden Dichtlippe ausgeführt sein, die flexibel genug ist, um eventuelle Unebenheiten an den Wänden des Garbehälters 12 ausgleichen zu können.

Die Dichtung 28 kann auch auf andere Weise als beschrieben am plattenartigen Körper 24 der Tiegeltrennvorrichtung angebracht werden. Eine Möglichkeit besteht darin, die Dichtung als flexible magnetische Dichtleiste auszuführen, die sich entlang von drei Rändern der Tiegeltrennvorrichtung erstreckt. Die Dichtleiste kann passiv wirken, sich also ähnlich einer aus dem Sanitärbereich für Duschtüren bekannten Dichtleiste an die metallischen Wände des Garbehälters 12 anlegen. Es ist auch möglich, eine aktive Dichtleiste zu verwenden, die entweder durch einen Aktivierungshebel gegen die Wände des Garbehälters gedrückt wird oder beispielsweise elektrisch aktiviert wird.

Abweichend von den gezeigten Ausführungsformen, bei denen ebene Tiegeltrennvorrichtungen verwendet werden, können auch Tiegeltrennvorrichtungen mit anderen geometrischen Formen zum Einsatz kommen. Beispielsweise können gekrümmte Tiegeltrennvorrichtungen verwendet werden, mit denen runde Garflächen im Garbehälter abgegrenzt werden können. Auf diese Weise kann ein "Topf" im Garbehälter gebildet werden, was Rühranwendungen vereinfacht. In einem solchen Fall können insbesondere mehrere miteinander zusammenwirkende Tiegeltrennvorrichtungen verwendet werden, die zusammen die gewünschte geometrische Form bilden.

## Patentansprüche

1. Verfahren zum Unterteilen eines tiegelartigen Garbehälters (12) in unterschiedliche Garzonen, die unterschiedlich angesteuert werden können, **dadurch gekennzeichnet, dass** in den Garbehälter (12) mindestens eine Tiegeltrennvorrichtung (22) eingesetzt wird, die unterschiedliche Garzonen voneinander abtrennt, wobei im Boden des tiegelartigen Garbehälters eine Heizvorrichtung aus einzeln ansteuerbaren Heizelementen vorgesehen ist, die den Garzonen zugeordnet sind.

2. Verfahren nach Anspruch 1, **dadurch gekennzeichnet, dass** beim Einsetzen der Tiegeltrennvorrichtung (22) eine Dichtung (28) vorgespannt wird, die sich an der Tiegeltrennvorrichtung (22) befindet.

3. Verfahren nach Anspruch 1 oder Anspruch 2, **dadurch gekennzeichnet, dass** die Tiegeltrennvorrichtung (22) am Garbehälter (12) verriegelt wird.

4. Verfahren nach einem der vorhergehenden Ansprüche, **dadurch gekennzeichnet, dass** von einer Steuerung (18) des Gargeräts (10) abgefragt wird, ob eine Tiegeltrennvorrichtung (22) im Garbehälter (12) angeordnet ist.

5. Gargerät mit einer Steuerung und einem tiegelartigen Garbehälter, in den eine Tiegeltrennvorrichtung mit einem plattenartigen Körper (24) und einer Dichtung (28), die sich entlang von mindestens drei Rändern des Körpers (24) erstreckt, eingesetzt ist, wobei die Steuerung eingerichtet ist, abzufragen, ob die Tiegeltrennvorrichtung im Garbehälter angeordnet ist, und/oder automatisch erkennt, ob die Tiegeltrennvorrichtung im Garbehälter angeordnet ist, und wobei die Steuerung eingerichtet ist, die Heizvorrichtung im Boden des Garbehälters virtuell Heizzonen zu unterteilen, denen einzeln ansteuerbare Heizelemente zugeordnet sind und die dem Bediener zur separaten Steuerung angeboten werden.

6. Gargerät nach Anspruch 5, **dadurch gekennzeichnet, dass** die Tiegeltrennvorrichtung einen Handgriff (50) an einem oberen Rand aufweist.

7. Gargerät nach Anspruch 5 oder Anspruch 6, **dadurch gekennzeichnet, dass** die Tiegeltrennvorrichtung mindestens eine Verriegelungsvorrichtung (30; 52) aufweist, mit der sie an einem tiegelförmigen Garbehälter (12) verriegelt werden kann.

8. Gargerät nach Anspruch 7, **dadurch gekennzeichnet, dass** die Verriegelungsvorrichtung mindestens einen Verriegelungshebel (30) aufweist.

9. Gargerät nach einem der Ansprüche 5 bis 8, **dadurch gekennzeichnet, dass** eine Spannvorrichtung (34) vorgesehen ist, mit der die Dichtung (28) vom Körper (24) weg nach außen beaufschlagt werden kann.

10. Gargerät nach einem der Ansprüche 5 bis 9, **dadurch gekennzeichnet, dass** der Körper (24) zwei parallel zueinander angeordnete Platten aufweist, zwischen denen die Dichtung (28) aufgenommen ist.

11. Gargerät nach Anspruch 9 und Anspruch 10, **dadurch gekennzeichnet, dass** die Spannvorrichtung (34) die Platten (24) einander annähern kann.

12. Gargerät nach Anspruch 11, **dadurch gekennzeichnet, dass** die Spannvorrichtung (34) mit der Verriegelungsvorrichtung (30) gekoppelt ist.

13. Gargerät nach Anspruch 12, **dadurch gekennzeichnet, dass** die Spannvorrichtung (34) durch mindestens eine Spannfläche (38) gebildet ist, die an dem Verriegelungshebel (30) vorgesehen ist.

14. Gargerät nach einem der Ansprüche 5 bis 13, **dadurch gekennzeichnet, dass** wenigstens ein Magnet oder ein magnetisierbares Element in der Tiegeltrennvorrichtung vorgesehen ist.

## Claims

1. A method of subdividing a pan-like cooking container (12) into different cooking zones which can be differently controlled, **characterized in that** at least one pan separating device (22) is inserted into the cooking container (12), which separates different cooking zones from one another, the bottom of the pan-like cooking container having a heating device provided therein with individually controllable heating elements assigned to the cooking zones.

2. The method according to claim 1, **characterized in that** when the pan separating device (22) is inserted, a seal (28) located on the pan separating device (22) is pretensioned.

3. The method according to claim 1 or claim 2, **characterized in that** the pan separating device (22) is locked to the cooking container (12).

4. The method according to any of the preceding claims, **characterized in that** a controller (18) of the cooking appliance (10) queries whether a pan separating device (22) is arranged in the cooking container (12).

5. A cooking appliance comprising a controller and a pan-like cooking container in which a pan separating device is inserted which has a plate-like body (24) and a seal (28) that extends along at least three edges of the body (24), wherein the controller is adapted to query whether the pan separating device is arranged in the cooking container, and/or automatically detects whether the pan separating device is arranged in the cooking container, and wherein the controller is adapted to virtually subdivide the heating device in the bottom of the cooking container into heating zones to which individually controllable heating elements are assigned and which are offered to the operator for separate control.

6. The cooking appliance according to claim 5, **characterized in that** the pan separating device has a handle (50) at an upper edge.

7. The cooking appliance according to claim 5 or claim 6, **characterized in that** the pan separating device includes at least one locking device (30; 52) by means of which it can be locked to a pan-shaped cooking container (12).

8. The cooking appliance according to claim 7, **characterized in that** the locking device includes at least one locking lever (30).

9. The cooking appliance according to any of claims 5 to 8, **characterized in that** a clamping device (34) is provided by means of which the seal (28) can be urged outwards away from the body (24).

10. The cooking appliance according to any of claims 5 to 9, **characterized in that** the body (24) includes two plates which are arranged parallel to each other and between which the seal (28) is received.

11. The cooking appliance according to claim 9 and claim 10, **characterized in that** the clamping device (34) can bring the plates (24) closer to each other.

12. The cooking appliance according to claim 11, **characterized in that** the clamping device (34) is coupled to the locking device (30).

13. The cooking appliance according to claim 12, **characterized in that** the clamping device (34) is formed by at least one clamping surface (38) provided on the locking lever (30).

14. The cooking appliance according to any of claims 5 to 13, **characterized in that** at least one magnet or magnetizable element is provided in the pan separating device.

## Revendications

1. Procédé de division d'un récipient de cuisson (12) de type poêlon en différentes zones de cuisson qui sont aptes à être commandées différemment, **caractérisé en ce qu'**au moins un dispositif de séparation de poêlon (22) est inséré dans le récipient de cuisson (12), lequel sépare différentes zones de cuisson les unes des autres, un dispositif de chauffage aves des éléments de chauffage qui sont aptes à être commandés individuellement et qui sont associés aux zones de cuisson étant prévu dans le fond du récipient de cuisson du type poêlon.

2. Procédé selon la revendication 1, **caractérisé en ce qu'**un joint (28) se trouvant sur le dispositif de séparation de poêlon (22) est précontraint lors de l'insertion du dispositif de séparation de poêlon (22).

3. Procédé selon la revendication 1 ou la revendication 2, **caractérisé en ce que** le dispositif de séparation de poêlon (22) est verrouillé sur le récipient de cuisson (12).

4. Procédé selon l'une des revendications précédentes, **caractérisé en ce qu'**une commande (18) de l'appareil de cuisson (10) interroge si un dispositif de séparation de poêlon (22) est agencé dans le récipient de cuisson (12).

5. Appareil de cuisson comprenant une commande et un récipient de cuisson du type poêlon dans lequel est inséré un dispositif de séparation de poêlon présentant un corps (24) du type plaque et un joint (28) qui s'étend le long d'au moins trois bords du corps (24), la commande étant aménagée de manière à interroger si le dispositif de séparation de poêlon est agencé dans le récipient de cuisson, et/ou détectant automatiquement si le dispositif de séparation de poêlon est agencé dans le récipient de cuisson, et la commande étant aménagée de manière à diviser le dispositif de chauffage au fond du récipient de cuisson virtuellement en zones de chauffage auxquelles sont associés des éléments de chauffage aptes à être commandés individuellement et qui sont offertes à l'utilisateur pour une commande séparée.

6. Appareil de cuisson selon la revendication 5, **caractérisé en ce que** le dispositif de séparation de poêlon présente une poignée (50) sur un bord supérieur.

7. Appareil de cuisson selon la revendication 5 ou la revendication 6, **caractérisé en ce que** le dispositif de séparation de poêlon présente au moins un dispositif de verrouillage (30 ; 52) au moyen duquel il est apte à être verrouillé sur un récipient de cuisson (12) en forme de poêlon.

8. Appareil de cuisson selon la revendication 7, **caractérisé en ce que** le dispositif de verrouillage présente au moins un levier de verrouillage (30).

9. Appareil de cuisson selon l'une des revendications 5 à 8, **caractérisé en ce qu'**il est prévu un dispositif de serrage (34) au moyen duquel le joint (28) est apte à être sollicité vers l'extérieur en éloignement du corps (24).

10. Appareil de cuisson selon l'une des revendications 5 à 9, **caractérisé en ce que** le corps (24) présente deux plaques qui sont agencées de manière parallèle l'une par rapport à l'autre et entre lesquelles le joint (28) est reçu.

11. Appareil de cuisson selon la revendication 9 et la revendication 10, **caractérisé en ce que** le dispositif de serrage (34) est apte à rapprocher les plaques (24) l'une de l'autre.

12. Appareil de cuisson selon la revendication 11, **caractérisé en ce que** le dispositif de serrage (34) est couplé au dispositif de verrouillage (30).

13. Appareil de cuisson selon la revendication 12, **caractérisé en ce que** le dispositif de serrage (34) est formé par au moins une surface de serrage (38) qui est prévue sur le levier de verrouillage (30).

14. Appareil de cuisson selon l'une des revendications 5 à 13, **caractérisé en ce qu'**il est prévu au moins un aimant ou un élément magnétisable dans le dispositif de séparation de poêlon.
